# FASCICULE DE BREVET EUROPEEN

(11) **EP 0 615 149 B1**
(45) Date de publication et mention de la délivrance du brevet: **04.02.1998**
(21) Numéro de dépôt: 94420061.7
(22) Date de dépôt: 21.02.1994
(51) Int. Cl.: G02C 5/22

(54) **Charnière élastique pour lunettes**
Federscharnier für Brille
Elastic hinge for spectacles

(30) Priorité: 09.03.1993 FR 9302918
(43) Date de publication de la demande: 14.09.1994
(73) Titulaire: CHEVASSUS S.A., F-39400 Morez (FR)
(72) Inventeur: Jaffelin, Etienne, F-39220 Les Rousses (FR)
(74) Mandataire: Kiehl, Hubert

(56) Documents cités:
- EP-A- 0 003 001
- EP-A- 0 003 928
- EP-A- 0 262 099
- EP-A- 0 426 947
- DE-A- 3 140 641
- FR-A- 1 511 263
- FR-A- 2 466 788
- FR-A- 2 614 953

## Description

La présente invention est relative à une charnière élastique pour lunettes reliant une branche à une façade, cette charnière autorisant un déplacement complémentaire élastique de la branche vers l'extérieur au-delà de sa position dite "ouverte". De telles charnières apportent un élément de confort dans le port de lunettes très apprécié du public, notamment du fait que les branches se plaquent contre les tempes avec une pression raisonnable.

L'un des types de charnières élastiques connues se différencie par la présence d'une coulisse mobile en translation à l'intérieur d'un boîtier, l'extrémité émergente de la coulisse portant un charnon mâle ou femelle. Dans la coulisse est taillée une lumière longitudinale de manière à y loger un ressort dont l'extrémité avant vient buter contre un axe, voire une goupille ou une vis, traversant le boîtier et la lumière. Ce type de charnière élastique est, par exemple, décrit dans les documents EP 0 426 947, FR 2 466 788, FR 1 511 263 et EP 0 262 099.

Fonctionnant à satisfaction, ce type de charnière élastique ne peut être fabriqué qu'en des dimensions importantes, ce qui limite leur application à des lunettes d'hommes. En effet, le bloc charnon-coulisse est taillé dans du maillechort qui est un alliage bon marché mais insuffisamment résistant pour permettre une miniaturisation. Par contre, l'importance du capot nécessite des usinages complémentaires de finition coûteux. De plus, la fraise utilisée pour tailler la lumière longitudinale laisse deux extrémités arrondies, l'arrondi arrière constituant alors un mauvais appui pour l'extrémité du ressort.

Le but de la présente invention est une charnière du type mentionné précédemment dont la structure du charnon-coulisse permet de diminuer sensiblement les dimensions générales de la charnière. Bien évidemment, les performances usuelles pour une telle charnière, telles que sa tenue à la traction, sa raideur à l'ouverture et l'absence de point dur lors du coulissement, doivent toujours être bien respectées. Autant que possible, la conception des pièces constitutives doit simplifier leur fabrication et leur assemblage.

Ces buts sont atteints grâce à une charnière élastique pour lunettes dont le charnon de branche est prolongé d'une coulisse mobile dans un boîtier de manière élastique contre l'action d'un ressort logé dans une lumière longitudinale centrale de la coulisse et agissant entre une butée transversale solidaire du boîtier et l'extrémité arrière de la coulisse, du fait que le charnon de branche et la coulisse sont réalisés en deux pièces distinctes. Selon l'invention, la coulisse est un tube de section rectangulaire allongée ; et le charnon présente un corps arrière dans lequel est ménagée une fente prévue pour recevoir la face latérale d'extrémité avant de la coulisse. De plus, le matériau de la coulisse présente une tenue mécanique telle que celle de l'acier commercialisé sous la dénomination "INOX".

Utilement, la hauteur du corps arrière du charnon au niveau de la fente est au moins égale à une fois et demie la hauteur de la coulisse.

L'un des avantages importants de cette charnière selon l'invention est que les deux pièces distinctes sont assemblées et non pas vissées ou rivetées, ce qui impliquerait la présence d'un trou préalable affaiblissant la zone correspondante constituant alors un point de rupture.

Avantageusement, le corps arrière du charnon a une hauteur sensiblement constante ; et le capot, formant avec la face plane de l'extrémité de la branche le boîtier, présente un premier conduit d'entrée de hauteur constante correspondant à celle du corps de charnon, suivi d'un logement de section correspondant à la hauteur et la largeur de la coulisse. L'avantage de la hauteur constante du corps arrière, notamment de sa partie crochet située au-delà de la fente, est que cette dernière est entièrement guidée lors de son coulissement dans le conduit d'entrée, ce qui l'empêche d'être soulevée lors d'une traction importante, empêchant par la même une déformation plastique accélérant une rupture.

Utilement, chaque face latérale du corps de charnon est complétée d'un tenon de guidage s'engageant respectivement dans une rainure de guidage ménagée longitudinalement dans chaque partie inférieure de face latérale du premier conduit d'entrée.

Avantageusement, le tube de section rectangulaire allongée constituant la coulisse est réalisé en acier commercialisé sous la dénomination "INOX". Alors, l'épaisseur de la paroi du tube constituant la coulisse est comprise entre 0,12 et 0,25 millimètre, et la hauteur de ladite paroi est comprise entre 1 et 2 millimètres.

L'invention sera mieux comprise à l'étude d'un mode de réalisation pris à titre d'exemple nullement limitatif et décrit par les figures suivantes :

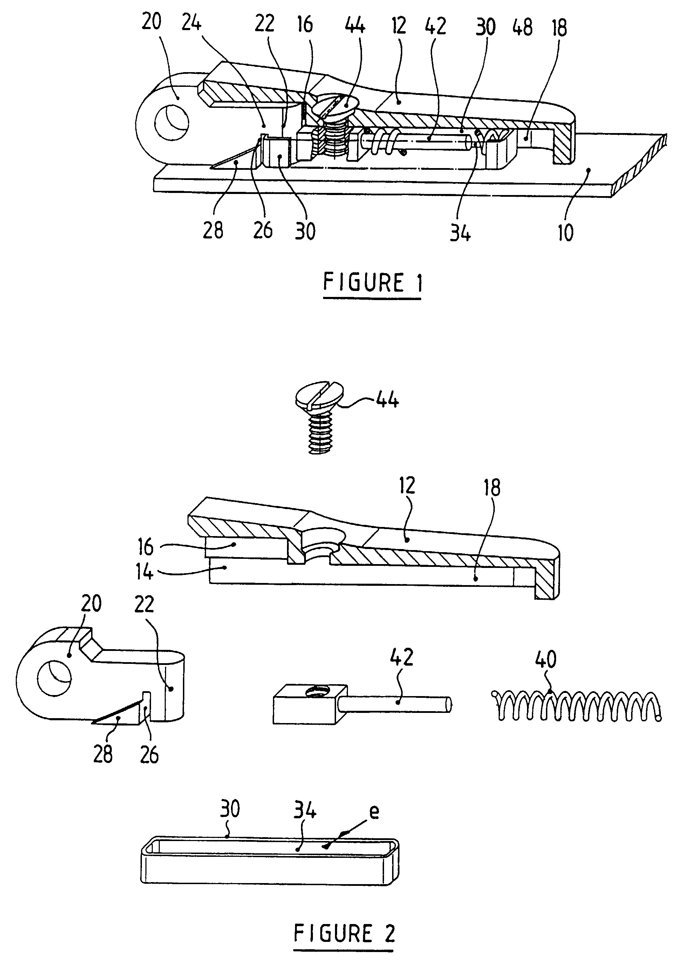

- la figure 1 est une vue en perspective schématique de la charnière assemblée dans laquelle le capot a été partiellement coupé pour faire apparaître les organes internes, et
- la figure 2 est une vue en perspective éclatée des pièces composant la charnière élastique.

Cette charnière est composée d'un charnon 20 assemblé à une coulisse 30, cet ensemble coulissant dans un boîtier composé d'un capot 12 rapporté par soudure sur l'extrémité plane de la branche 10.

Selon l'invention, la coulisse 30 se présente sensiblement sous la forme d'un tube à parois minces de section rectangulaire allongée et orienté dans le sens de la longueur du boîtier. Cette coulisse est, par exemple, réalisée en tronçonnant un profilé tubulaire dont la section correspond à la section finale de la coulisse, et ce d'une longueur correspondante à la hauteur du logement interne 18 du boîtier. L'opération de tronçonnage d'un profilé est préférable à une opération de sciage car elle n'altère nullement les caractéristiques mécaniques du matériau. Le profilé peut être réalisé à partir d'un feuillard dont les bords sont repliés l'un contre l'autre pour soudure longitudinale. Le tube ainsi formé est ensuite laminé à la section rectangulaire allongée voulue.

Typiquement, cette coulisse peut avoir une largeur de l'ordre de 1,25 millimètre, une longueur de 12 millimètres, et une hauteur de 1,2 millimètre. L'épaisseur "e" de la paroi est comprise entre 0,12 et 0,25 millimètre, de préférence 0,17 millimètre. Après de nombreux essais de résistance en atelier, il s'est avéré avantageux de réaliser cette coulisse à partir d'un feuillard d'acier commercialisé sous la dénomination "INOX" présentant une remarquable tenue mécanique et ne nécessitant aucun traitement de surface supplémentaire pour conserver un coefficient de friction suffisamment bas pour un coulissement sans à-coups.

Le charnon 20, qu'il soit mâle ou femelle, présente un corps arrière 22 dans lequel a été ménagée une fente 26 dont la profondeur correspond à la hauteur de la coulisse 30. A ce titre, la hauteur du corps arrière 22 est au moins égale à une fois et demie la hauteur de la coulisse, soit, en l'occurrence, de l'ordre de 1,6 millimètre. De chaque face latérale du corps arrière protubère un tenon de guidage 28 qui, selon le mode d'usinage, est au moins triangulaire sinon rectangulaire ou carré. Ce charnon peut être réalisé de manière usuelle par usinage dans un bloc de maillechort.

En correspondance, le capot 12 formant le dessus du boîtier de la charnière élastique présente deux parties. La partie externe constitue un conduit d'entrée 16 de hauteur et de largeur correspondant à celles du corps arrière 22 du charnon 20, hormis la partie inférieure 14 dont la hauteur et la largeur correspondent à celles de la coulisse 30. En d'autres termes, la partie inférieure constitue deux rainures de guidage 14 pour les tenons 28 du corps de charnon. Ce conduit 16 est suivi d'un logement 18 prolongeant la partie inférieure 14, donc de largeur et de hauteur identiques à celles de la coulisse 30. Ces deux parties peuvent être simplement réalisées par deux fraisages successifs, l'outil de fraise se déplaçant en translation latérale, la première taillant le conduit d'entrée 16 étant plus profonde et moins large que la seconde. Ce mode d'usinage laisse donc des parois latérales parfaitement lisses optimisant le coulissement des pièces internes. Les arrondis d'extrémité n'interfèrent nullement avec le mouvement de ces pièces internes.

Il est à noter que la forme parallélépipédique donnée au corps 22 de charnon 20 est arrondie en sa face interne pour correspondre à la forme arrondie de la fin du fraisage de la chambre 16. Cette forme généralement parallélépipédique du corps 22, en combinaison avec la partie supérieure du conduit d'entrée 16 également parallélépipédique, permet de maintenir guidée la partie arrière du corps 22 située au-delà de la fente 26 et formant un crochet qui ne peut donc plus se relever à l'occasion d'une traction importante appliquée par la coulisse 30. Ce guidage empêche une déformation plastique du pont de matière 24 situé au-dessus de la fente 26, ce qui augmente sensiblement la force de traction supportée avant rupture. De plus, les tenons 28 du charnon 20 assurent un guidage latéral indépendant de celui de la coulisse 30 qui n'est qu'assemblée.

Lors de l'assemblage de la charnière élastique selon l'invention, il suffit d'insérer la face verticale d'extrémité avant de la coulisse 30 dans la fente 26 du corps 22 de charnon 20 pour retrouver un charnon-coulisse conventionnel. On peut alors installer dans la lumière interne 34 de la coulisse 30 le ressort 40, éventuellement guidé par une tige interne 42, l'ensemble étant inséré dans le boîtier. Lors de cette insertion, les tenons 28 du corps 22 de charnon s'engagent dans les rainures de guidage 14. On installe enfin, de manière connue, une vis 44 au travers du capot 12 que l'on engage dans un trou taraudé d'une pièce terminant la tige 42 pour créer une butée pour l'extrémité avant du ressort 42.

On notera que, la coulisse étant réalisée à partir d'un profilé rectangulaire, la face d'extrémité interne de la lumière 34 est rectiligne créant ainsi un support absolument plan pour l'extrémité arrière du ressort 40.

Un autre avantage de la charnière selon l'invention est qu'il est possible de stocker d'une part des charnons et d'autre part une gamme de coulisses de longueurs différentes, ce qui permet de mieux gérer la fabrication d'une gamme de charnières comprenant des ressorts plus ou moins longs selon les besoins.

Enfin, l'avantage principal de ce mode de réalisation du charnon-coulisse est de permettre une miniaturisation importante de ce type de charnière élastique parallèlement à l'apparition de ressort de diamètre réduit à 1,2 millimètre. Par exemple, cette largeur peut être réduite jusqu'à 2,4 millimètres, ce qui représente une diminution de l'ordre de 20 % par rapport à la largeur moyenne des charnières du marché. Surtout, la hauteur peut être diminuée à 1,5 millimètre, ce qui représente pas moins de 50 % de réduction par rapport à la hauteur des charnières usuelles du marché.

Cette miniaturisation permet d'envisager l'application de charnières élastiques aux lunettes pour femmes dont les branches sont normalement très fines pour des considérations esthétiques. De nombreuses améliorations peuvent être apportées à cette charnière dans le cadre de cette invention.

## Revendications

1. Charnière élastique pour lunettes dont le charnon de branche (20) est prolongé d'une coulisse (30) mobile dans un boîtier (10,12) de manière élastique contre l'action d'un ressort (40) logé dans une lumière longitudinale centrale (34) de la coulisse et agissant entre une butée (44) transversale solidaire du boîtier et l'extrémité arrière de la coulisse (32), caractérisée en ce que le charnon de branche (20) et la coulisse (30) sont réalisés en deux pièces distinctes, en ce que la coulisse (30) est un tube de section rectangulaire allongée, que le charnon (20) présente un corps arrière (22) dans lequel est ménagée une fente (26) prévue pour recevoir la face latérale d'extrémité avant de la coulisse, et en ce que le matériau de la coulisse présente une tenue mécanique telle que celle de l'acier commercialisé sous la dénomination "INOX".

2. Charnière selon la revendication 1, caractérisée en ce que la hauteur du corps arrière (22) du charnon au niveau de la fente (26) est au moins égale à une fois et demie la hauteur de la coulisse (30).

3. Charnière selon la revendication 2, caractérisée en ce que le corps arrière (22) du charnon a une hauteur sensiblement constante, et en ce qu'un capot (12), formant avec la face plane de l'extrémité de la branche (10) le boîtier, présente un premier conduit d'entrée (16) de hauteur constante correspondant à celle du corps (22) de charnon, suivi d'un logement (18) de section correspondant à la hauteur et la largeur de la coulisse (30).

4. Charnière selon la revendication 3, caractérisée en ce que chaque face latérale du corps (22) de charnon est complétée d'un tenon de guidage (28) s'engageant respectivement dans une rainure de guidage (14) ménagée longitudinalement dans chaque partie inférieure de face latérale du premier conduit d'entrée (16).

5. Charnière selon la revendication 1, caractérisée en ce que le tube de section rectangulaire allongée constituant la coulisse est réalisé en acier commercialisé sous la dénomination "INOX".

6. Charnière selon la revendication 5, caractérisée en ce que l'épaisseur de la paroi du tube constituant la coulisse est comprise entre 0,12 et 0,25 millimètre, et la hauteur de ladite paroi est comprise entre 1 et 2 millimètres.

## Patentansprüche

1. Elastisches Brillenscharnier, dessen Bügel-Scharnierteil (20) durch einen Schieber (30) verlängert ist, der in einem Gehäuse (10, 12) gegen die Wirkung einer in einer zentralen Längsausnehmung (34) des Schiebers angeordneten Feder (40) elastisch beweglich ist, die zwischen einem quer im Gehäuse angeordneten und mit diesem fest verbundenen Anschlag (44) und dem hinteren Ende des Schiebers (30) wirkt, dadurch gekennzeichnet, daß das Scharnierteil (20) und der Schieber (30) aus zwei getrennten Teilen hergestellt sind, daß der Schieber (30) ein Rohr mit rechteckigem länglichen Querschnitt ist, daß das Scharnierteil (20) einen hinteren Körper (22), in dem ein Schlitz (26) zur Aufnahme der Seitenfläche des vorderen Endes des Schiebers vorgesehen ist, und daß das Material des Schiebers eine mechanische Festigkeit wie der Stahl aufweist, der unter der Bezeichnung "INOX" vertrieben wird.

2. Scharnier nach Anspruch 1, dadurch gekennzeichnet, daß der hintere Körper (22) des Scharnierteils auf Höhe des Schlitzes (26) wenigstens eineinhalbmal so hoch wie der Schieber (30) ist.

3. Scharnier nach Anspruch 2, dadurch gekennzeichnet, daß der hintere Körper (22) des Scharnierteils eine im wesentlichen gleichbleibende Höhe hat, und daß ein mit der ebenen Fläche des Endes des Bügels (10) das Gehäuse bildender Deckel (12) einen ersten Eintrittskanal (16) aufweist, dessen gleichbleibende Höhe derjenigen des Körpers (22) des Scharnierteils entspricht, und auf den ein Sitz (18) mit einem Querschnitt folgt, der der Höhe und der Breite des Schiebers (30) entspricht.

4. Scharnier nach Anspruch 3, dadurch gekennzeichnet, daß jede Seitenfläche des Scharnierteilkörpers (22) durch einen Führungszapfen (28) vervollständigt ist, der jeweils in eine Führungsnut (14) eingreift, die längs in jedem unteren Teil der Seitenfläche des ersten Eintrittskanals (16) vorgesehen ist.

5. Scharnier nach Anspruch 1, dadurch gekennzeichnet, daß das Rohr mit rechteckigem länglichen Querschnitt, das den Schieber bildet, aus einem Stahl hergestellt ist, der unter der Bezeichnung "INOX" vertrieben wird.

6. Scharnier nach Anspruch 5, dadurch gekennzeichnet, daß die Dicke der Wand des den Schieber bildenden Rohrs zwischen 0,12 und 0,25 mm beträgt und die Höhe der Wand zwischen 1 und 2 mm beträgt.

## Claims

1. Elastic hinge for spectacles, the side-member knuckle (20) of which is extended by a slide (30) which is movable in a casing (10, 12) in an elastic manner against the action of a spring (40) housed in a longitudinal central opening (34) in the slide and acting between a transverse stop (44) integral with the casing and the rear end (32) of the slide, characterised in that the side-member knuckle (20) and the slide (30) are produced in two distinct pieces, in that the slide (30) is a tube of elongated rectangular cross-section, in that the knuckle (20) has a rear body (22) in which a slot (26) intended for receiving the lateral face of the front end of the slide is formed, and in that the material of the slide has mechanical behaviour such as that of the steel marketed under the name "INOX".

2. Hinge according to claim 1, characterised in that the height of the rear body (22) of the knuckle at the level of the slot (26) is at least equal to one and a half times the height of the slide (30).

3. Hinge according to claim 2, characterised in that the rear body (22) of the knuckle has a substantially constant height, and in that a cover (12), which combines with the flat face of the end (10) of the side-member to form the casing, has a first entrance passage (16) with a constant height corresponding to that of the knuckle body (22), followed by a housing (18) with a cross-section corresponding to the height and width of the slide (30).

4. Hinge according to claim 3, characterised in that each lateral face of the knuckle body (22) is complemented by a guide stud (28) fitting respectively into a guide groove (14) formed longitudinally in each lower part of the lateral face of the first entrance passage (16).

5. Hinge according to claim 1, characterised in that the tube of elongated rectangular cross-section constituting the slide is produced in steel marketed under the name "INOX".

6. Hinge according to claim 5, characterised in that the thickness of the wall of the tube constituting the slide is between 0.12 and 0.25 millimetre, and the height of the said wall is between 1 and 21 millimetres.
